# EUROPEAN PATENT APPLICATION

(11) **EP 1 055 508 A2**
(43) Date of publication of application: **29.11.2000**
(21) Application number: 00304250.4
(22) Date of filing: 19.05.2000
(51) Int. Cl.: B29D 30/50

(54) **Method of forming a tyre bead**

(30) Priority: 20.05.1999 GB 9911767
(71) Applicant: SUMITOMO RUBBER INDUSTRIES LTD., Hyogo-ken (JP)
(72) Inventor: Marriott, Peter Robert, Warwickshire CV9 2LP (GB)
(74) Representative: Stewart, Charles Geoffrey

(57) **Abstract**

A method of forming a tyre bead characterised by forming an inextensible bead hoop (6) having a plurality of longitudinally extending reinforcing members (RM1-RM4,28) substantially spaced apart in at least the axial direction by flowable material, wrapping said bead hoop (6) with a ply (5) of tyre carcass fabric such that the fabric enfolds only both axial sides and the radially inner side of the hoop and subsequently applying a compressive force axially across the bead hoop to displace the flowable material radially outward of the bead hoop to form a bead apex (8, 24, 25).

## Description

The present invention relates to a method of forming a tyre bead in a tyre manufacturing process. The invention relates specifically to forming the generally triangular-shaped section component commonly known as the bead apex.

A pneumatic tyre comprises a ground contacting tread having at each axial edge a radially inwardly extending sidewall terminating at its radially inner end in a wheelrim contacting bead.

Extending through the tyre tread and sidewalls between both beads is a carcass reinforcement normally comprising one or more plies of cord reinforced rubber fabric. The carcass reinforcement is anchored in each bead by being turned radially outwardly around a circumferentially extending inextensible bead hoop to form a carcass ply turn-up.

In order to increase the rigidity of the tyre bead and also tc improve durability, the carcass ply turn-up portion is spaced axially apart from the carcass ply main portion by a rubber filler component. This component has a generally triangular shape tapering radially outwardly and as such is commonly known as a bead apex.

Conventionally in the tyre manufacturing process the bead apex is produced as an extruded rubber profile, which is subsequently cut to length and is commonly pre-assembled to the radially outer face of the inextensible bead hoop.

The separate operations of extruding the apex profile, cutting to length and pre-assembling to the bead hoop add greatly to the time and cost of tyre manufacture.

It has also been shown in for example GB 768 980 to have the same rubber for the apex and the rubber surrounding the bead wires but methods of manufacture for these constructions have comprised complex bead/apex extrusion processes requiring specially shaped extrusion dies.

It is therefore an object of the present invention to improve tyre manufacture by obviating the above possibility.
According to the present invention a method of forming the bead region of a tyre during manufacture comprises forming an inextensible bead hoop having a plurality of longitudinally extending reinforcing members substantially spaced apart in at least the axial direction by flowable material, wrapping said bead hoop with a ply of tyre carcass fabric such that the fabric enfolds only both axial sides and the radially inner side of the hoop and subsequently applying a compressive force axially across the bead hoop to displace the flowable material radially outward of the bead hoop.

According to another aspect the invention provides a tyre comprising a carcass ply extending in a main portion between two bead regions and in the bead regions being turned radially outwardly around a bead hoop to form ply turn-up portions, the bead hoop comprising a plurality of longitudinally extending reinforcing elements embedded in a material, and axially between each ply turn-up portion and the main ply portion extending radially outwardly from the bead hoop a bead apex, characterised in that the material embedding the reinforcing elements of the bead hoop and the material of the bead apex are the same material, the bead apex having been formed by the method above and that there is no boundary between the bead hoop and the bead apex.

Further aspects of the invention will become obvious from the following description by way of example only of embodiments of the invention and the following schematic drawings in which:
Figure 1 shows a cross-section of a radial pneumatic tyre;
Figures 2A-2C show details of forming a bead apex according to the method of the present invention; and
Figures 3-5 show alternative embodiments of the invention.

In the following description the term 'axial' refers to a direction parallel to the axis of rotation of a tyre on a wheel and the term 'radial' means a direction at right angles to the axis of rotation. Also the term 'spiral' means a plane curve shape like the cross-section of a roll of tape and 'helical' means a curve shaped like the thread or groove of a screw.

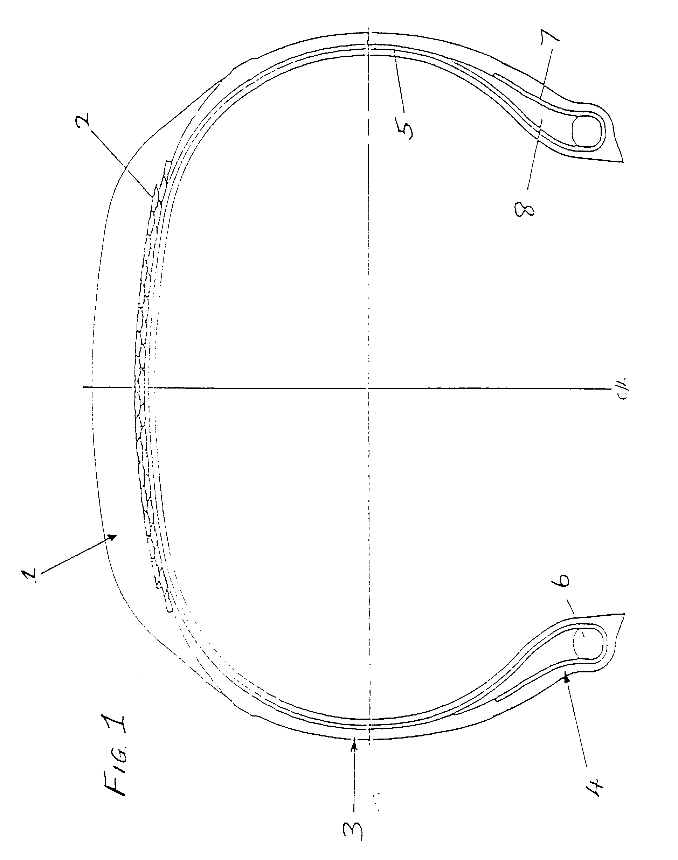

Figure 1 shows general constructional details of a radial pneumatic tyre.

The tyre comprises a ground contacting tread region 1 reinforced by a breaker belt 2 comprising in this embodiment two plies of metal cord reinforced tyre fabric. Extending radially inwardly from each axial edge of the tread is a sidewall region 3 which terminates in its radially innermost part in wheelrim contacting bead region 4.

Extending in a main ply region between the two bead regions 4 and through the entire structure is a reinforcing carcass ply 5 comprising in this embodiment a single ply of rubber fabric reinforced by radially disposed cords.

The carcass ply 5 is anchored in each bead region 4 by being turned from the axial inside towards the outside around a circumferentially extending inextensible bead core or bead hoop 6. The carcass ply is then extended radially outwardly to form ply turn-ups 7.

Between the carcass ply main part 5 and turn-up portion 7 is disposed a rubber apex 8 extending taperingly radially outwardly from the radial outside of the bead hoop 6 to beyond the end of the ply turn-up.

The inextensible bead hoop 6 may be formed as a solid hoop but is conventionally formed by plural turns of a reinforcing element such as a metal wire often wound to form a rectangular cross-section. Conventional configurations of such arrangements of windings include plural reinforcing elements comprising steel wire lying side-by-side and wound spirally outwardly or a single reinforcing element wound both helically and spirally. Frequently the steel wire is coated with a thin film of a vulcanisable rubber compound to assist holding the wound coil in shape and preventing voids in the structure.

In accordance with the present invention such an apex is formed in situ during the tyre carcass assembly process.

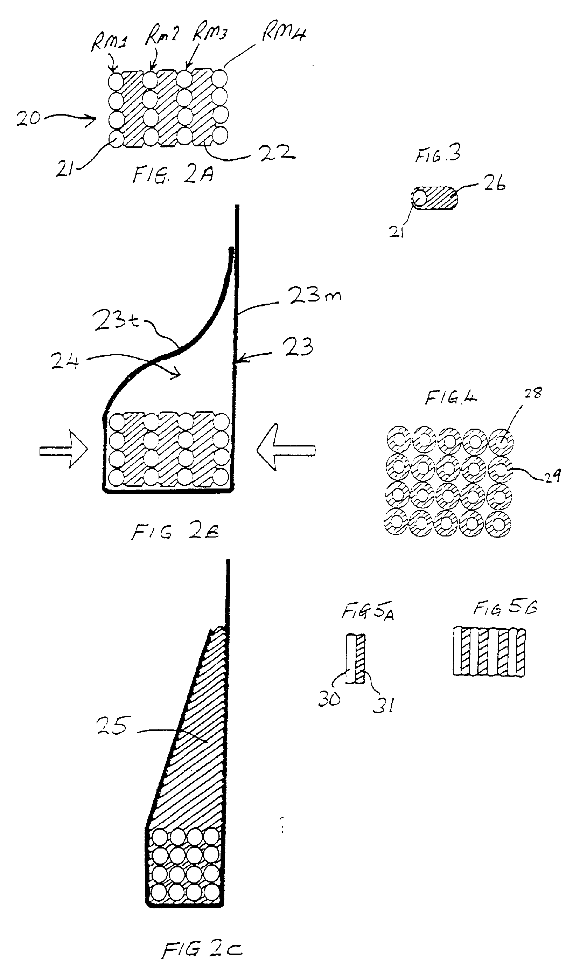

The method of the invention is explained in a first embodiment shown in Figures 2A-2C.

In a first step a bead coil 20, shown in radial cross-section in Figure 2A, is formed. The bead coil comprises four reinforcing members RM1-RM4, each being formed from the spiral winding of four turns of a single reinforcing element of a inextensible steel wire 21. The reinforcing members RM1-RM4 are spaced apart in the axial direction by separators 22 comprising a vulcanisable rubber compound.

In a second step of the method shown in Figure 2B the bead coil of Figure 2A is wrapped in a conventional manner by a carcass ply 23 of tyre fabric such that the ply 23 envelops and is adhered to the inner and outer axial sides and the radially inner side of the bead coil. The radially outwardly extending carcass ply turn-up portion 23t is left loosely overlying the carcass ply main portion 23m at its radially outermost edge forming a void 24 immediately radially outwardly of the bead coil.

In a subsequent operation a compressive force indicated by the arrows in Figure 2B is applied axially across the bead coil 20 and a substantial proportion of the flowable unvulcanised rubber compound of the separators 22 is thereby displaced radially outwardly from between the reinforcing elements of the bead coil and since the coil 20 is bounded on three sides by cord reinforcement ply the rubber flows radially outwardly into the void 24 to fill it and form a triangular-shaped rubber apex 25 as shown in Figure 2C. The remaining small proportion of flowable material is left embedding the reinforcing elements of the bead coil.

The compressive force to displace the unvulcanised rubber may be applied in the tyre building operation for example by the pressing action of a diaphragm or roller. However it is preferably applied by the compressive action of the curing bag/bladder in the final tyre moulding process wherein the applied heating assists in displacing the rubber compound of the separators 21 by initially reducing the compound viscosity. Subsequent to displacement forming the apex 25 the compound cures completing the formation in situ of the apex.
Rubber compounds suitable for the separators 22 in forming the apex preferably have a Mooney viscosity value of 30-65 MU at 130°C.

When forming the apex in the tyre moulding operation it has been found that after an initial bladder pressure of less than 1 bar applied for less than 1 minute whilst the moulding press closes, the subsequent application of a heating medium at approximately 14 bar pressure and 205°C into the bladder is sufficient to displace the rubber compound from between the reinforcing elements.

The dimensions and number of rubber separators 22 may be chosen according to both the dimensions of the bead coil and the volume of the apex which it is desired to form.

Whilst in this first embodiment the reinforcing members RM1-RM2 and each of the rubber separators 22 may be formed independently and subsequently assembled together to form the bead coil 20, the complete structure may also be formed in a single winding operation. For example by passing the steel reinforcing wire 21 through a cross-head rubber extruder having an elongated die-slot a continuous composite steel 21/rubber 26 tape having a cross-section as shown in Figure 3 can be formed. Adjacent spiral windings of three of such tapes can be used in forming the structure of the bead coil.

In alternative embodiments of the invention the bead core may be formed as shown in Figure 4 using a reinforcing steel wire 28 embedded in a substantial coating 29 of a vulcanisable rubber. This bead core may be formed by spiral winding a tape comprising in this example five such coated wires arranged side-by-side or it may be formed by a single such coated wire which is wound both helically and spirally to build layer upon layer. The step of compressing the bead core wall displace that rubber lying between axially adjacent wires thereby forming the apex and again leaving the wires embedded in the remaining vulcanisable rubber.

The resultant tyre is characterised by there being no boundary between the bead hoop and the apex.

In yet another form the bead hoop may be formed of a tape shown in Figure 5A comprising a reinforcing element 30 laminated with a vulcanisable rubber component 31 which may be helically wound forming the bead core structure shown in cross-section in Figure 5B.

In another embodiment of the invention the unvulcanised rubber of the separators may contain a chemical foaming agent, particularly one activated at the tyre moulding temperature, thus forming in situ a bead apex having a cellular elastomer structure.

In other enbodiments the separators may comprise thermoplastic or thermosetting plastic materials.

According to the present invention a tyre bead apex may be conveniently formed in-situ thereby reducing the expense and simplifying the tyre manufacturing process.

## Claims

1. A method of forming a tyre bead characterised by forming an inextensible bead hoop (6) having a plurality of longitudinally extending reinforcing members (RM1-RM4,28) substantially spaced apart in at least the axial direction by flowable material, wrapping said bead hoop (6) with a ply (5) of tyre carcass fabric such that the fabric enfolds only both axial sides and the radially inner side of the hoop and subsequently applying a compressive force axially across the bead hoop to displace the flowable material radially outward of the bead hoop to form a bead apex (8,24,25).

2. A method according to claim 1, characterised in that the flowable material comprises a vulcanisable rubber compound.

3. A method according to either of claims 1 or 2, characterised in that the compressive force applied axially across the bead hoop is applied in the tyre moulding operation.

4. A method according to claim 1, 2 or 3, characterised in that the longitudinal extending reinforcing members are discrete.

5. A method according to claim 4, characterised in that the longitudinal reinforcing members comprise a plurality of spiral turns of one or more reinforcing elements.

6. A method according to claims 1, 2 or 3, characterised in that the reinforcing members comprise a continuous helical winding (21).

7. A method according to claim 6, characterised in that the reinforcing members comprise a spiral winding of one or more reinforcing elements (RM1-RM2).

8. A method according to any of claims 1 to 7, characterised in that the reinforcing member comprises metal wires.

9. A tyre comprising a carcass ply extending in a main portion between two bead regions (4) and in the bead regions (4) being turned radially outwardly around a bead hoop (6) to form ply turn-up portions (7), the bead hoop (6) comprising a plurality of longitudinally extending reinforcing elements (RM1-RM4,28) embedded in a material, and axially between each ply turn-up portion (7) and the main ply portion (5) extending radially outwardly from the bead hoop (6) a bead apex (8,24,25), characterised in that the material (23,29) embedding the reinforcing elements of the bead hoop and the material of the bead apex are the same material, that there is no boundary between the bead hoop, and the bead apex and the bead apex is formed by the method of claim 1.

10. A tyre according to claim 9, characterised in that the material of the bead apex and bead hoop is a rubber compound.
